# EUROPÄISCHE PATENTANMELDUNG

(11) **EP 1 063 079 A2**
(43) Veröffentlichungstag der Anmeldung: **27.12.2000**
(21) Anmeldenummer: 00112736.4
(22) Anmeldetag: 16.06.2000
(51) Int. Cl.: B29C 67/00, B31D 5/00

(54) **Dreidimensionales Modell und Vorrichtung zum Erzeugen eines derartigen Modells**

(30) Priorität: 26.06.1999 DE 19929420
(71) Anmelder: Bayerische Motoren Werke Aktiengesellschaft, 80809 München (DE)
(72) Erfinder: Lindner, Walter, 82140 Olching (DE)

(57) **Zusammenfassung**

Bei einer Vorrichtung zum Erzeugen eines dreidimensionalen, aus aufeinanderliegenden Schichten gleicher Stärke bestehenden Modells, die vor dem Aufeinanderlegen in Form gebracht und nach dem Aufeinanderlegen miteinander verbunden sind, sind die Schichten aus einer Papierrolle, die aus einem als Papierrolle ausgebildeten Materialspeicher ausläuft, mittels eines Schneidwerkzeugs erzeugt, das linear und quer zur Bewegungsbahn der Papierrolle bewegt ist.

## Beschreibung

Die Erfindung bezieht sich auf ein dreidimensionales Modell und ein Verfahren sowie eine Vorrichtung zum Erzeugen eines derartigen Modells.

Es ist bekannt, ein derartiges Modell mit Hilfe von Stereolithographie herzustellen. Dabei wird das Modell schichtweise aufgebaut, indem ein Teilmodell in einer entsprechenden Flüssigkeit Schritt für Schritt abgesenkt wird und die Flüssigkeit mit Hilfe eines Laserstrahls an den Stellen koaguliert wird, an denen der Aufbau des Teilmodells fortgesetzt werden soll. Diese Technik ist unter Umweltgesichtspunkten nicht unkritisch und auch meist nicht geeignet, größere Modelle herzustellen. Ist es beispielsweise erforderlich, ein Fahrzeug in Originalgröße zu erzeugen, so scheidet die Verwendung der Laser-Stereolithographie hierzu aus.

Der Erfindung liegt die Aufgabe zugrunde, ein Modell herzustellen, das in seiner Größe nicht begrenzt ist, und ferner eine Vorrichtung sowie ein Verfahren zu schaffen, mit der (dem) ein derartiges Modell hergestellt werden kann.

Die Erfindung löst diese Aufgabe für die Vorrichtung mit Hilfe des Patentanspruchs 1 und für das Verfahren mit Hilfe des Patentanspruchs 7. Das erfindungsgemäße Modell besitzt vorzugsweise die in den Patentansprüchen 5 und 6 angegebenen Merkmale.

Das Modell wird bei der Erfindung aus einzelnen Papierschichten beziehungsweise Papierlagen hergestellt, die nacheinander erzeugt und übereinander gestapelt werden. Die Erzeugung eines derartigen Modells ist nicht an beispielsweise optische Gegebenheiten gebunden. Sie ist auch anwendbar, wenn es darum geht 1:1-Modelle größeren Ausmaßes herzustellen. Der besondere Vorteil des im Anspruch 7 beschriebenen Verfahrens besteht in der Verkürzung der Herstellungszeit des Modells, da bereits während des Papiertransportvorgangs die einzelnen Papierschichten zugeschnitten werden und ein Stopp des Papiertransports nicht erforderlich ist. Vielmehr wird während des Ablaufs der Papierbahn von der Rolle Schicht für Schicht erzeugt und auf der jeweils vorhergehenden Schicht abgelegt.

Die Herstellung des Modells kann in Form eines Hohlkörpers oder aus Vollmaterial erfolgen. Es sind auch Mischformen möglich, bei denen das Modell teilweise hohl ist, teilweise aus Vollmaterial besteht.

Die Patentansprüche 2 bis 4 zeigen vorteilhafte Ausgestaltungen der erfindungsgemäßen Vorrichtung.

Die Erfindung ist anhand zweier Ausführungsbeispiele weiter erläutert. Es zeigt
- Fig. 1: ein erstes Ausführungsbeispiel zum Erzeugen eines hohlen dreidimensionalen Modells und
- Fig. 2: ein Ausführungsbeispiel, mit dem ein Modell in Form eines Vollkörpers erzeugt wird.

Bei beiden Ausführungsbeispielen sind Teile gleicher Funktion mit gleichen Bezugszeichen versehen. Bei beiden Ausführungsbeispielen wird das Modell mit Hilfe von Papierschichten erzeugt, die aufeinandergelegt und verklebt sind. Dieses Modell ist schematisch auf der linken Seite der Figuren gezeigt. Die Höhenschichten des Modells sind durch waagerechte Striche voneinander getrennt.

Erzeugt wird das Modell, indem aus einem als Papierrolle ausgebildeten Speicher 1 das Papier als Papierbahn 2 entnommen und einer Übernahmestation 3 zugeführt wird. Dort befindet sich ein Schneidwerkzeug 4 zum Konturschneiden, bei der es sich um einen Laser, Diamant, Messer od. dgl. handelt. Das Schneidwerkzeug ist quer zur Bewegungsbahn der Papierbahn verfahrbar. Vorzugsweise geschieht die Querbewegung des Schneidwerkzeugs während der Bewegung der Papierbahn. Es erfolgt also eine überlagerte Bewegung der Papierbahn und des Schneidwerkzeugs. Das Schneidwerkzeug besitzt einen oder mehrere Aktuatoren, die jeweils quer zur Bewegungsbahn der Papierbahn verfahrbar sind und die vorzugsweise punktförmig die Papierbahn perforieren. Durch die überlagerte Bewegung der Papierbahn kommt dadurch eine Schnittlinie, beispielsweise für die Außenkontur des Modells zustande.

In der Übernahmestation 3 wird mit Hilfe des Schneidwerkzeugs 4 das Papier in Form gebracht und dem Stapel der bereits vorhandenen Schichten zugeführt. Hierzu dienen Umlenkwalzen und Transportmittel, beispielsweise ein Förderband, die nicht im einzelnen dargestellt sind. Am Ort der bereits vorhandenen Schichten wird die jeweilige Schicht abgelegt und verklebt.

Auf diese Weise entsteht das mit 5 bezeichnete und im Schnitt gezeigte Modell. Es enthält lediglich in jeder dieser Schichten Wandabschnitte, die übereinander angeordnet sind. Inwieweit es erforderlich ist, zum Verstreben der einzelnen Wandschichten und des Modells insgesamt Verstrebungen als Verbindungen gegenüberliegender Wandabschnitte stehenzulassen, hängt von der Gestalt und Größe des jeweiligen Modells ab.

In der Figur ist ferner in einem durch eine punktförmige Begrenzung beschriebenen Raum die Arbeitsweise des Schneidwerkzeugs 4 gezeigt. Die einzelnen Papierschichten sind mit 6 bezeichnet. In der Übernahmestation wird mit Hilfe 4 des Schneidwerkzeugs aus der jeweiligen Papierlage nur der jeweilige Wandabschnitt 7 erzeugt. Er ist durch seine Innen- und Außenkontur festgelegt. Das übrige mit Papier bezeichnete Material wird nicht verwertet. Es wird in der Vorrichtung mit Hilfe einer Aufrollvorrichtung 8 aus der Übernahmestation 3 entnommen und in einem Abfallbehälter 9 gesammelt.

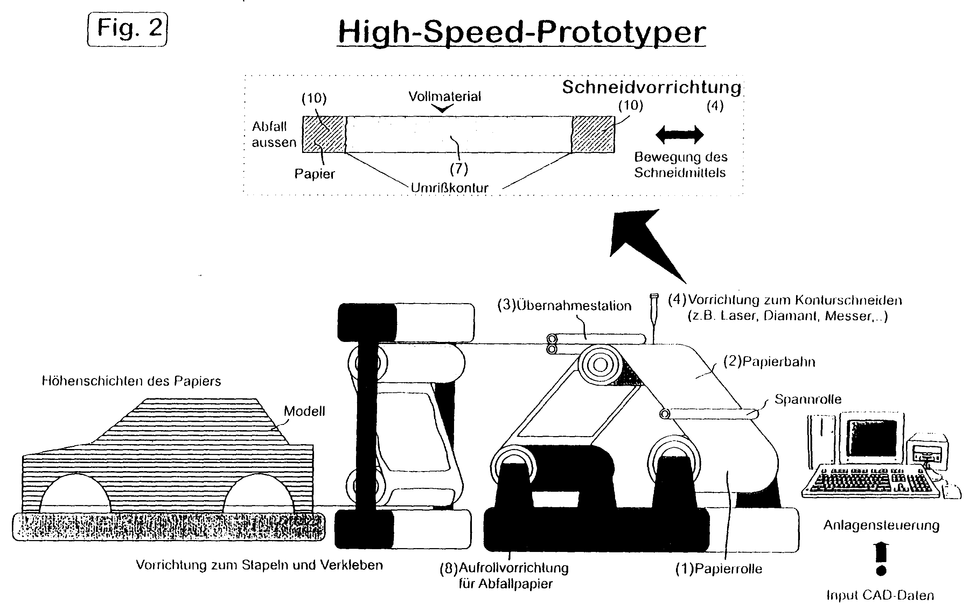

Beim Ausführungsbeispiel von Fig. 2 wird ein aus Vollmaterial bestehendes Modell erzeugt. In der Übernahmestation wird mit Hilfe des Schneidwerkzeugs 4 die jeweilige Papierlage erzeugt. Hier verbleibt nur noch das mit 10 bezeichnete Abfallpapier, während die jeweilige Papierschicht 7' des Modells auf das vorhandene Teilmodell aufgebracht und mit diesem verklebt wird.

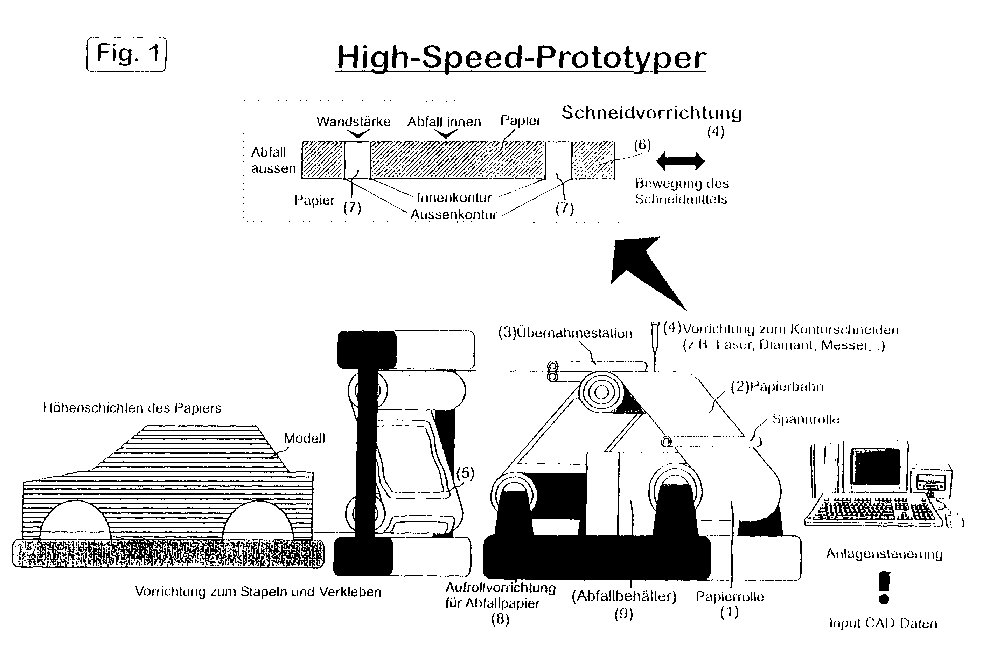

Sowohl mit dem in Fig. 1 als auch in Fig. 2 gezeigten Ausführungsbeispiel ist es möglich, mit relativ geringem Aufwand Papiermodelle zu erzeugen, die in ihrer Größe nicht begrenzt sind. Eine Umweltbelastung tritt während der Erzeugung des Modells nicht auf.

## Patentansprüche

1. Vorrichtung zum Erzeugen eines dreidimensionalen, aus aufeinanderliegenden Schichten gleicher Stärke bestehenden Modells, die vor dem Aufeinanderlegen in Form gebracht und nach dem Aufeinanderlegen miteinander verbunden sind, **dadurch gekennzeichnet**, daß die Schichten aus einer Papierrolle, die aus einem als Papierrolle ausgebildeten Materialspeicher ausläuft, mittels eines Schneidwerkzeugs erzeugt sind, das linear und quer zur Bewegungsbahn der Papierrolle bewegt ist.

2. Vorrichtung nach Anspruch 1, **gekennzeichnet durch** die Aufeinanderfolge des Materialspeichers, einer Bearbeitungsstation zum Erzeugen der individuellen Gestalt der einzelnen Schichten und einer Übergabestation, mittels der die einzelne Schicht auf den Stapel der bereits vorhandenen Schichten aufgelegt wird.

3. Vorrichtung nach Anspruch 2, **dadurch gekennzeichnet**, daß das Material aus dem Speicher in Abschnitten gleicher Länge entnommen wird.

4. Vorrichtung nach einem der Ansprüche 1 bis 3, **dadurch gekennzeichnet**, daß das Schneidwerkzeug durch eine Datenverarbeitungsanlage gesteuert ist, in der die Daten des zu erzeugenden Modells gespeichert sind.

5. In einer Vorrichtung gemäß einem der Ansprüche 1 bis 4 hergestelltes Modell, **dadurch gekennzeichnet**, daß es aus Vollmaterial besteht.

6. In einer Vorrichtung gemäß einem der Ansprüche 1 bis 4 hergestelltes Modell, **dadurch gekennzeichnet**, daß es hohl ist.

7. Verfahren zum Erzeugen eines dreidimensionalen Modells gemäß den Patentansprüchen 5 oder 6 mittels einer Vorrichtung gemäß einem der Ansprüche 1 bis 4, **dadurch gekennzeichnet**, daß das Schneidwerkzeug quer zur Bewegungsbahn der Papierrolle verfahren wird, während gleichzeitig die Papierrolle bewegt wird.
